(19) Europäisches Patentamt

European Patent Office

Office européen des brevets

(11) **EP 1 183 526 B1**

(12) **EUROPÄISCHE PATENTSCHRIFT**

(45) Veröffentlichungstag und Bekanntmachung des Hinweises auf die Patenterteilung:
**27.04.2005 Patentblatt 2005/17**

(21) Anmeldenummer: **00947775.3**

(22) Anmeldetag: **03.06.2000**

(51) Int Cl.⁷: **G01N 23/20**

(86) Internationale Anmeldenummer:
**PCT/DE2000/001817**

(87) Internationale Veröffentlichungsnummer:
**WO 2000/075646 (14.12.2000 Gazette 2000/50)**

(54) **EINRICHTUNG UND VERFAHREN ZUR ANALYSE ATOMARER UND/ODER MOLEKULARER ELEMENTE MITTELS WELLENLÄNGENDISPERSIVER, RÖNTGENSPEKTROMETRISCHER EINRICHTUNGEN**

DEVICE AND METHOD FOR ANALYZING ATOMIC AND/OR MOLECULAR ELEMENTS BY MEANS OF WAVELENGTH DISPERSIVE X-RAY SPECTROMETRIC DEVICES

DISPOSITIF ET PROCEDE POUR ANALYSER DES ELEMENTS ATOMIQUES ET/OU MOLECULAIRES AU MOYEN D'UNITES DE SPECTROMETRIE DE RAYONS X, DISPERSIVES EN LONGUEUR D'ONDE

(84) Benannte Vertragsstaaten:
**AT BE CH CY DE DK ES FI FR GB GR IE IT LI LU MC NL PT SE**

(30) Priorität: **08.06.1999 DE 19926056**

(43) Veröffentlichungstag der Anmeldung:
**06.03.2002 Patentblatt 2002/10**

(73) Patentinhaber: **GKSS-Forschungszentrum Geesthacht GmbH**
**21502 Geesthacht (DE)**

(72) Erfinder:
• **MICHAELSEN, Carsten**
**D-21502 Geesthacht (DE)**

• **BORMANN, Rüdiger**
**D-21224 Rosengarten (DE)**

(74) Vertreter: **UEXKÜLL & STOLBERG**
**Patentanwälte**
**Beselerstrasse 4**
**22607 Hamburg (DE)**

(56) Entgegenhaltungen:
**DE-A- 4 402 113     DE-A- 19 738 408**
**US-A- 5 485 499**

• **PATENT ABSTRACTS OF JAPAN vol. 1995, no. 11, 26. Dezember 1995 (1995-12-26) & JP 07 229863 A (RIGAKU IND CO), 29. August 1995 (1995-08-29)**

**Beschreibung**

Die Erfindung betrifft eine Einrichtung zur Analyse atomarer und/oder molekularer Elemente mittels wellenlängendispersiver, röntgenspektrometrischer Einrichtungen, umfassend wenigstens eine eine Multilayerschicht aufweisende Spiegel- oder Fokussierungseinrichtung, insbesondere bei einer solchen Einrichtung, bei der von einer zu analysierenden Probe durch einfallende primäre Röntgenstrahlen oder Elektronenstrahlen induzierte Fluoreszenzstrahlen vor Auftreffen auf einem Meß- oder Analysedetektor auf die Spiegel- oder Fokussierungseinrichtung geleitet wird sowie ein derartiges Verfahren.

Einrichtungen und Verfahren der eingangs genannten Art werden in der wissenschaftlichen Analytik aber auch im Bereich der industriellen Anwendung zum Nachweis atomar und/oder molekular vorliegender Elemente in den verschiedensten Anwendungsbereichen verwendet, z.B wenn es darauf ankommt, eben in einer zu untersuchenden bzw. zu analysierenden Probe in geringsten Mengen vorliegende Verunreinigungen oder auch Störungen in Proben zu analysieren bzw. nachzuweisen. Ein besonders wichtiges Anwendungsgebiet ist beispielsweise im industriellen Bereich die Untersuchung von Halbleiterwafern (Siliziumwafer, Germaniumwafer) und dergleichen, die den Ausgangspunkt für die Herstellung hochintegrierter Halbleiterschaltkreise bilden.

Dabei werden beispielsweise von einer Röntgen- oder Elektronenstrahlenquelle an sich beliebiger Art Röntgen- oder Elektronenstrahlen auf eine Probe geleitet, wodurch als Teil der von der Probe dann reflektierten Strahlen Fluoreszenzstrahlen emittiert werden, die durch die einfallenden primären Röntgenstrahlen aufgrund an sich bekannter physikalischer Vorgänge induziert werden. Diese Fluoreszenzstrahlen werden vor dem Auftreffen auf eine Meß- oder Analyseanordnung, beispielsweise in Form eines fluoreszenzstrahlenselektiven Detektors zunächst auf einen geeignet ausgewählten Kristall gegeben, dort reflektiert und dann auf den Meß- oder Analysedetektor geführt. Diese Kristalle wirken als Analysatoren. Diese Kristalle, die künstlich hergestellt werden können, können aus dünnen, sich mehrfach regelmäßig abwechselnden Schichten zweier oder mehrerer Werkstoffe mit unterschiedlichen röntgenoptischen Eigenschaften bestehen. Daran wird, um in dem vorangehend aufgeführten Beispiel zu bleiben, die einfallenden Fluoreszenzstrahlen reflektiert, aber nur derjenige Anteil, für den die Bragg'sche Gleichung

$$n \, \lambda = 2d \sin \theta$$

erfüllt ist. Hierbei ist

$$\lambda \, (nm) = \frac{1{,}24}{E(keV)},$$

wobei n eine natürliche Zahl (n = 1, 2, 3, 4 ...), λ die Wellenlänge des Röntgenlichtes, d die Periodizität (Gitterkonstante) des Analysatorkristalls, 2θ der Beugungswinkel und E die Energie der Röntgenstrahlen ist. Eine Berücksichtigung des Effekts der Brechung, der für Röntgenstrahlen sehr klein ist, führt zu einer gegenüber der zuerst genannten modifizierten Gleichung, wobei sich aus den eingestellten Winkeln θ und der Gitterkonstante d des Analysators nach der ersten Gleichung bzw. deren Modifikation die Wellenlänge der reflektierten Röntgenstrahlen ergibt. Durch Variation des Winkels kann also die Wellenlänge der reflektierten Strahlen, im obigen Beispiels der Fluoreszenzstrahlen, in kontrollierter Weise ausgewählt werden.

Der große Vorteil der künstlichen Kristalle aus vielen sich regelmäßig abwechselnden Schichten, man spricht in diesem Zusammenhang auch von sogenannten Multilayerschichten, ist, daß man die Werkstoffe der Vielfachschicht hinsichtlich bestmöglicher Funktion auswählen und optimieren kann. Dieses ist ein wesentlicher Vorteil der künstlich hergestellten Multilayerschicht gegenüber natürlichen Kristallen.

Die Intensität der reflektierten Strahlung ist maßgeblich von den in der Multilayerschicht verwendeten Werkstoffen abhängig. Zusätzlich können die Gitterkonstanten der Multilayerschicht in weiteren Grenzen variiert werden als es in natürlichen Kristallen der Fall ist.

Ein besonderer Vorteil der als Analysatoren wirkenden Multilayerschicht ist der, daß damit die Analyse leichter Elemente bei gleichbleibender Intensität und ohne gesundheitsgefährdende Nebenwirkungen möglich ist, was die Multilayerschichten gegenüber natürlichen Kristallen zusätzlich auszeichnet, soweit letztere überhaupt für die Analyse leichter Elemente zur Verfügung stehen.

Man hat bisher in vielen Fällen für speziell zu analysierende Elemente die Ausbildung der Multilayerschicht bzw. die einzelnen Schichten der Multilayerschicht auf das atomar bzw. molekular in einer zu untersuchenden Probe zu erwartende Element abgestimmt bzw. abgestellt. So ist beispielsweise die Bestimmung des Borgehalts in sauerstoffhaltigen Werkstoffen wie Borphosphorsilikat in der Halbleiterindustrie von großer Bedeutung, da Borphosphorsilikat in der Prozeßverarbeitung bei der Herstellung mikroelektronischer Bauteile routinemäßig verwendet wird.

Bisher wurde für den Nachweis von Bor eine Multilayerschicht verwendet, die aus Molybdän-Borcarbid-Schichten besteht. Eine derartige Schicht ist beispielsweise in der US-A-4 785 470 beschrieben.

Ein wesentlicher Nachteil der Molybdän-Borcarbid-Multilayer aber auch dafür verwendeter Wolfram-Kohlenstoff-Multilayer besteht darin, daß diese im Energiebereich 183 eV nur eine Reflektivität von ungefähr 35,4 % bzw. 10 % bei einem optimalen Winkel von $\theta = 26,5°$ (bei einer Wolfram-Kohlenstoff-Multilayerschicht) haben. Zusätzlich erweist sich die Verwendung von Wolfram-Kohlenstoff-Multilayerschichten zum Nachweis von Bor in Proben, die zusätzlich Sauerstoff enthalten, als problematisch. Das Problem des Nachweises von Bor in sauerstoffhaltigen Proben liegt im wesentlichen darin begründet, daß die Emissionslinie von Sauerstoff mit E = 525 eV ungefähr die dreifach Energie hat wie die Emissionslinie von Bor bei E = 183 eV. Die Multilayerschicht reflektiert daher nach der eingangs genannten Gleichung die Sauerstofflinie in der dritten Bragg-Ordnung (n = 3) bei ungefähr dem gleichen Winkel wie die Borlinie in der ersten Ordnung (n = 1). Da die vorerwähnte Wolfram-Kohlenstoff-Vielfachschicht für E = 525 eV bei $\theta = 26,7°$ in der dritten Ordnung noch eine Reflektivität von 0,24 % aufweist, ist mit dieser Vielfachschicht eine wellenlängendispersive Trennung der Bor- und Sauerstofflinien und somit ein eindeutiger Nachweis beider Elemente nur unzureichend, wenn überhaupt möglich.

Eine Verbesserung ergibt sich bei der Verwendung von Molybdän-Borcarbid-Vielfachschichten (Mo-B$_4$C), deren Einsatz für einen optimierten Nachweis von Bor mit kommerziellen Röntgen-Fluoreszenz-Spektrometern Stand der Technik ist. Gegenüber einer W-C-Vielfachschicht ergibt sich eine deutlich erhöhte Reflektivität von 35,4 % in der ersten Bragg-Ordnung. Gleichzeitig ist die Reflektivität einer solchen Mo-B$_4$C-Vielfachschicht für 525 eV in der dritten Ordnung auf 0,16 % erniedrigt, so daß sich zusätzlich eine geringfügig verbesserte Unterdrückung der Sauerstofflinie ergibt.

Es erweist sich jedoch als Nachteil, daß sowohl W-C- als auch Mo-B$_4$C-Vielfachschichten auch noch eine signifikante Reflektivität für E = 90 eV aufweisen. Dies ist ebenfalls für die Halbleiterindustrie von großer Bedeutung, da die Silizium-L-Emissionslinien bei etwa 90 eV liegen. So zeigen entsprechende Rechnungen, daß eine Mo-B$_4$C-Vielfachschicht mit d = 8 nm bei einem Winkel von $\theta = 25,9°$, neben der erwünschten hohen Reflektivität bei E = 183 eV für den optimierten Nachweis von Bor, auch noch eine unerwünschte Reflektivität von ungefähr 3,2° bei E = 90 eV besitzt. Dies führt bei borhaltigen Proben wie Borphosphorsilikat (BPSG), wenn sie sich auf Siliziumwafern befinden, zu einem stark erhöhten Untergrundsignal, welches sich sehr nachteilig auf die röntgenspektrometrische Nachweisgrenze von Bor auswirkt.

Es ist somit Aufgabe der vorliegenden Erfindung, eine Einrichtung und ein Verfahren zu schaffen, mit denen eine sehr stark verbesserte Röntgenanalyse für den Nachweis von Bor möglich ist, wobei sowohl die Einrichtung als auch das Verfahren mit an sich im Stand der Technik bekannten Mitteln auf einfache Weise aufgebaut und betrieben werden kann, so daß bisherige Analyseeinrichtungen und bisherige Verfahren an sich in den Grundzügen beibehalten werden können und die Einrichtung und das Verfahren sowohl bei forschenden als auch industriellen Einrichtungen auf einfache Weise kostengünstig herstellbar und auf einfache Weise kostengünstig betreibbar sein sollen.

Gelöst wird die Aufgabe gemäß der erfindungsgemäßen Einrichtung dadurch, daß die flächenförmige Multilayerschicht durch wenigstens ein Schichtenpaar aus einer Lanthanschicht (La-Schicht) und aus einer Borcarbidschicht (B$_4$C) gebildet wird.

Der Vorteil der erfindungsgemäßen Lösung besteht im wesentlichen darin, daß damit insbesondere im Energiebereich von 180 eV insbesondere der Nachweis von Bor außerordentlich günstig ist. Die besonders günstigen röntgenoptischen Eigenschaften der die Schichtenpaare der Multilayerschicht bildenden Werkstoffe wie Lanthan und Borcarbid führen gegenüber den eingangs genannten, bekannten Analysatoren zu einer erhöhten Reflektivität für die Borlinie sowie zu einer wesentlich verbesserten Unterdrückung sowohl der Sauerstoff-K- als auch der Silizium-L-Linien.

Die Multilayerschicht aus dem Grundschichtenpaar Lanthan und Borcarbid weist für die Borlinie eine Reflektivität von 60 % in der ersten Bragg Ordnung auf. Dieses ist fast doppelt soviel wie in den besten zur Zeit bekannten Analysatoren. Weiterhin beträgt die Reflektivität für 90 eV nur noch 0,65 %, so daß die Unterdrückung der Si-L-Linie gegenüber früheren Lösungen um den Faktor 5 verbessert ist. Gleichzeitig beträgt die Reflektivität bei 525 eV nur noch 0,016 % und somit ist die Unterdrückung der Sauerstofflinie um mehr als einen Faktor 10 besser als bei den besten zur Zeit eingesetzten Analysatoren in Form von Multilayerschichten.

Die Gesamtheit dieser Faktoren führt zu einem wesentlich verbesserten Signal-Rausch-Verhältnis und damit zu einer wesentlichen Verbesserung der röntgenspektrometrischen Nachweisgrenzen insbesondere für Bor.

Gemäß einer vorteilhaften Ausgestaltung der Einrichtung besteht die Multilayerschicht aus einer Anzahl von 1 bis 100 Schichtpaaren, d.h. aus 2 bis 200 Einzelschichten. Die Anzahl der Schichten bzw. Schichtpaare, die zur Ausbildung einer bestimmten Multilayerschicht gewählt wird, richtet sich im wesentlichen nach der zu lösenden Analyse bzw. Meßaufgabe und der in der zu untersuchenden Probe zu erwartenden Art und Menge der Verunreinigung.

Besonders vorteilhaft ist es, die Multilayerschicht derart aufzubauen, daß sie aus einer Anzahl von 40 bis 50 Schichtpaaren besteht, d.h. aus 80 bis 100 einzelnen Schichten.

Bei einer Grundversion der Einrichtung ist die Dicke der jeweiligen Multilayerschicht konstant, wobei es dabei aber auch möglich ist, die Dicke einer Schicht jedes Multilayerpaares gegenüber der anderen Schicht desselben Multilayerpaares unterschiedlich dick auszubilden.

Grundsätzlich wird bei den vorangehend dargestellten Ausführungsbeispielen gewährleistet, daß ein paralleler Fluoreszenzstrahl an der gesamten Fläche der Multilayerschicht mit maximaler Intensität reflektiert wird.

Bei einer noch anderen vorteilhaften Ausgestaltung der Einrichtung variiert die Dicke der jeweiligen Multilayerschicht über die Fläche, womit gewährleistet werden kann, daß nicht parallele Fluoreszenzstrahlen, die unter unterschiedlichen Winkeln auf die Multilayerschicht fallen, für die gewünschte Wellenlänge über die gesamte Fläche der Multilayerschicht mit maximaler Intensität reflektiert werden. Die Variation des Einfallswinkels θ wird hierbei, entsprechend der eingangs genannten ersten Gleichung oder deren berechnungskorrigierter Modifikation, durch eine Variation der Gitterkonstanten d kompensiert, so daß λ konstant bleibt.

Vorteilhafterweise ist die Einrichtung dahingehend modifiziert, daß die Multilayerschicht gekrümmt ist oder bei einer noch anderen vorteilhaften Ausgestaltung, daß die Multilayerschicht auf einem flächigen Träger (Substrat) angeordnet ist, was aber bei allen Ausgestaltungen der Multilayerschicht möglich ist. Hierdurch wird gewährleistet, daß ein nicht paralleles Fluoreszenzstrahlenbündel, das an verschiedenen Positionen unter unterschiedlichen Winkeln auf die Multilayerschicht trifft, in seiner Strahlform beeinflußt werden kann, so daß beispielsweise ein auf die Multilayerschicht einfallendes divergentes Fluoreszenzstrahlenbündel in ein paralleles oder auch ein fokussiertes Fluoreszenzstrahlenbündel umgeformt werden kann. Auch kann es vorteilhaft sein, die Dicke der einzelnen Schichten der Multilayerschicht selbst wiederum unterschiedlich auszubilden, d.h. über die Fläche der Multilayerschicht in geeigneter Weise zu variieren, so daß die Multilayerschicht die gewünschte Wellenlänge der Fluoreszenzstrahlen des unter unterschiedlichen Winkeln auftreffenden Strahlenbündels über die gesamte Fläche mit maximaler Intensität reflektiert.

Es sind auch solche Kombinationen bei der Multilayerschicht denkbar, bei denen die eine Schicht des Multilayerpaares über die Fläche konstant dick ist, wohingegen die andere Schicht des Schichtpaares über die Fläche ihrer Dicke variiert.

Vorzugsweise liegt schließlich die Dicke der Schicht im Bereich von 1 bis 20 nm. Untersuchungen haben ergeben, daß bei derartigen Schichtdicken ein Höchstmaß an Reflektivität und Auflösungsvermögen mittels der Multilayerschicht erreicht werden kann.

Das Verfahren zur Analyse atomarer und/oder molekularer Elemente mittels wellenlängendispersiver, röntgenspektroskopischer Einrichtungen, umfassend wenigstens eine eine Multilayerschicht aufweisende Spiegel- oder Fokussierungseinrichtung, auf die primäre Röntgenstrahlung oder Fluoreszenzstrahlen geleitet werden, insbesondere derart, bei dem von einer zu analysierenden Probe durch einfallende primäre Röntgen- oder Elektronenstrahlen induzierte Fluoreszenzstrahlen vor Auftreffen auf einem Meß- oder Analysedetektor auf die Spiegel- oder Fokussierungseinrichtung geleitet werden, ist dadurch gekennzeichnet, daß die primären Röntgenstrahlen oder die Fluoreszenzstrahlen auf die aus wenigstens einem Schichtenpaar aus einer Lanthanschicht (La-Schicht) und aus einer Borcarbidschicht ($B_4C$) gebildeten Multilayerschicht geleitet werden.

Mittels des erfindungsgemäßen Verfahrens ist es möglich, für die Borlinie eine Reflektivität von über 60 % in der ersten Bragg-Ordnung zu erreichen. Dieses ist fast doppelt soviel wie bei den besten zur Zeit betriebenen Verfahren, bei denen Multilayerschichten als Analysatoren eingesetzt werden.

Im übrigen gelten für das erfindungsgemäße Verfahren genau die Vorteile wie für die erfindungsgemäße Einrichtung angegeben, wobei auf diese obigen Vorteilsangaben bezug genommen wird.

Die Erfindung wird nun unter Bezugnahme auf die nachfolgenden schematischen Zeichnungen anhand eines Ausführungsbeispieles im einzelnen beschrieben. Darin zeigen:

Fig. 1    den von einer Röntgenstrahlenquelle ausgehenden Strahlenverlauf auf eine Probe, von dort auf zwei Multilayerspiegel und von dort auf eine Meß- oder Analyseeinrichtung (Detektor),

Fig. 2    den Verlauf der einfallenden und reflektierten Strahlen (hier im Beispiel Fluoreszenzstrahlen) auf die Multilayerschicht der erfindungsgemäßen Einrichtung, die auf einem Träger/Substrat aufgebracht ist, und

Fig. 3    in Form einer graphischen Darstellung die Reflektivität einer La-$B_4$C-Multilayerschicht, bestehend aus 100 Perioden mit d = 8 nm und einem Schichtdickenverhältnis Γ = 0,4, bei einem Winkel von θ = 26,18°, als Funktion der Energie.

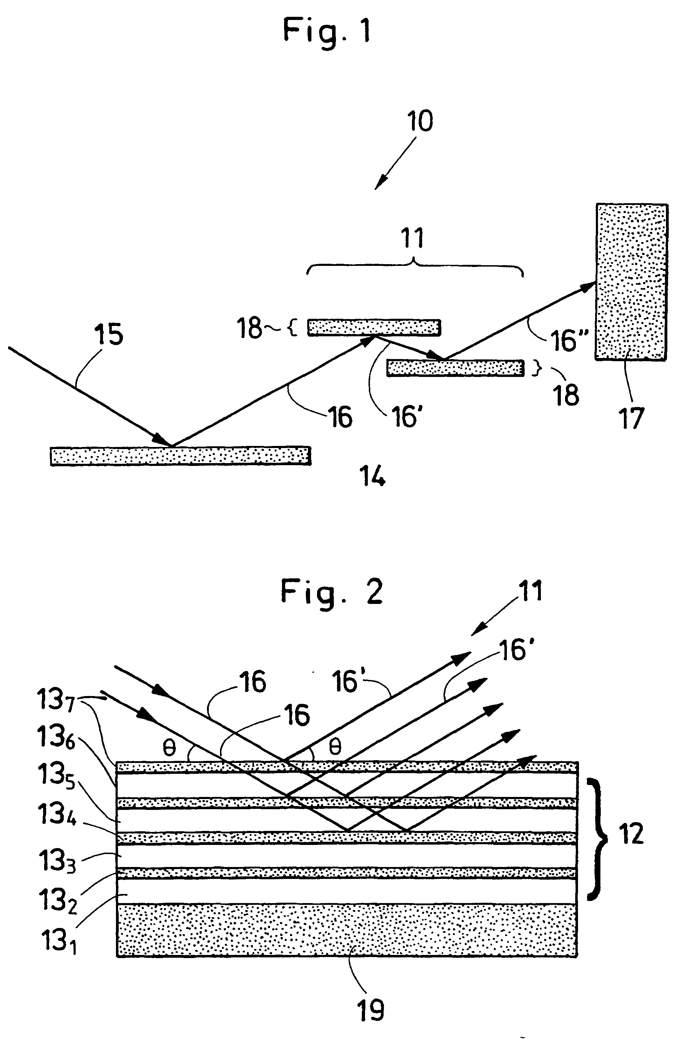

Es wird zunächst Bezug genommen auf die Darstellung von Fig. 1, die schematisch eine Einrichtung 10 zur Analyse atomarer und/oder molekularer Elemente zeigt, wie sie erfindungsgemäß beispielhaft realisiert und in vielen Anwendungsbereichen mit geringfügigen Abweichungen Anwendung findet.

Von einer hier nicht dargestellten Röntgen- oder Elektronenquelle werden primäre Röntgenstrahlen oder Elektronenstrahlen 15 abgegeben, die auf eine Probe 14 fallen, beispielsweise in Form eines Siliziumwafers, um Verunreinigungen im Siliziumwafer im Bereich der Oberfläche und im oberflächennahen Bereich nachzuweisen bzw. zu untersuchen. Aufgrund bekannter physikalischer Vorgänge werden Fluoreszenzstrahlen 16 als reflektierte Strahlen erzeugt, die in ihrem Strahlungskontinuum Informationen über die Art der im Siliziumwafer bzw. der Probe 14 enthaltenen zusätzlichen atomaren und/oder molekularen Elemente enthalten. Die Fluoreszenzstrahlen 16 werden auf eine Spiegel- oder Fokussierungseinrichtung 11 gegeben, die im Beispiel von Fig. 1 aus zwei durch jeweils eine Multilayerschicht 12 gebildete Spiegel- oder Fokussierungseinrichtungen 11 gebildet wird, die aber auch bei einer anderen Ausgestaltung der Einrichtung 10 nur aus einer Spiegel- oder Fokussierungseinrichtung 11 bestehen kann. Die von der Spiegel- oder Fokussierungseinrichtung 11 reflektierten Fluoreszenzstrahlen 16' bzw. 16" werden auf eine Meß- oder Analyseanordnung (Detektor) 17 gegeben, mittels der auf an sich bekannte Weise quantitative und qualitative Aussagen über die Art der auf der Probe 14 anzutreffenden atomaren und/oder molekularen Elemente erfolgen können, die auf dem bzw. in dem die Probe 14 bildenden Werkstoff enthalten sein können.

In Fig. 2 ist beispielhaft ein Ausschnitt aus der Spiegel- oder Fokussierungseinrichtung 11 dargestellt, die die eigentliche Multilayerschicht 12, hier aufgebracht auf einem Träger bzw. Substrat 19, darstellt.

Die einzelnen Schichten $13_{1...n}$ bilden durch die Menge aller Paare $13_1$; $13_2$, $13_3$; $13_4$, $13_5$; $13_6$ usw. die Gesamtmultilayerschicht 12. Jede der Schichten pro Schichtenpaar wird aus einer La-Schicht und einer $B_4C$-Schicht gebildet. Der einfallende Strahl, hier im Beispiel Fluoreszenzstrahlung 16 wird an jeder Grenzfläche eines Schichtenpaares reflektiert und verläßt als reflektierte Strahlen 16' die Spiegel- oder Fokussierungseinrichtung 11 und gelangt von dort entweder auf eine zweite Spiegel- oder Fokussierungseinrichtung 11, vergleiche Fig. 1 und von dort auf die Meß- oder Analyseeinrichtung 17, oder aber ohne nochmalige Reflexion an einer Spiegel- oder Fokussierungseinrichtung 11 direkt auf die Meß- und Analyseanordnung 17.

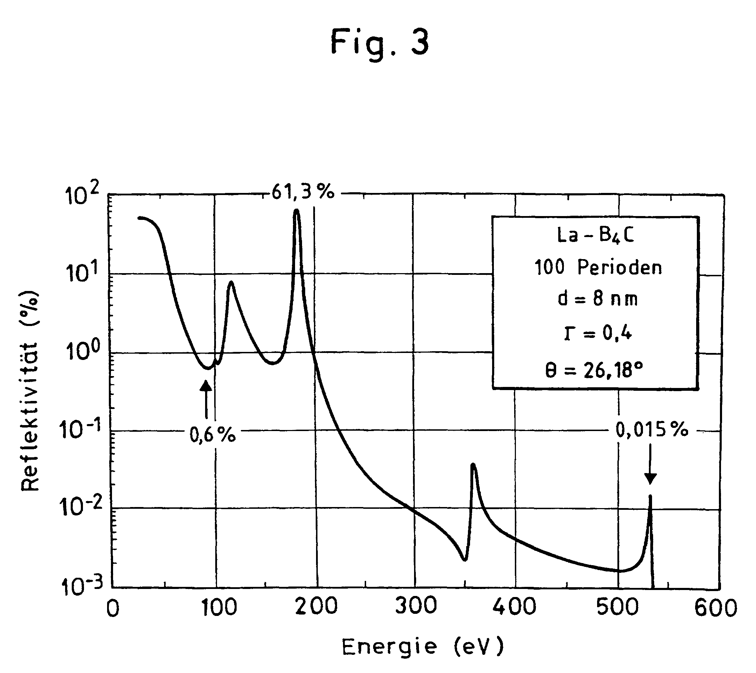

Aus Fig. 3 ist in Verbindung mit der nachfolgenden Tabelle ersichtlich, daß die erfindungsgemäße Vielfachschicht (La-$B_4$C-Vielfachschicht), wie oben schon erwähnt, für die Borlinie eine Reflektivität von über 60 % in der ersten Bragg-Ordnung aufweist. Dies ist fast doppelt so hoch wie in den besten zur Zeit als Analysatoren bekannten und eingesetzten Multilayerschichten. Weiterhin beträgt die Reflektivität für 90 eV nur noch 0,65 %, so daß auch eine Unterdrückung der Si-L-Linie gegenüber früheren Lösungen um einen Faktor 5 verbessert ist. Gleichzeitig beträgt die Reflektivität bei 525 eV nur noch 0,016 %, und somit ist die Unterdrückung der Sauerstofflinie um mehr als einen Faktor 10 besser als bei den besten zur Zeit eingesetzten Analysatoren. Die Gesamtheit dieser Faktoren führt zu einem wesentlich verbesserten Signal-Rausch-Verhältnis und damit zu einer wesentlichen Verbesserung der röntgenspektrometrischen Nachweisgrenze insbesondere für Bor.

| Analysator | Reflektivität bei ~90 eV (%) | Reflektivität bei ~183 eV (%) | Reflektivität bei ~525 eV (%) |
|---|---|---|---|
| W-C | 3,6 | 10,4 | 0,24 |
| Mo-$B_4$C | 3,2 | 35,4 | 0,18 |
| La-$B_4$C | 0,65 | 61,3 | 0,016 |

Das erfindungsgemäße Verfahren läuft gemäß dem oben im Zusammenhang mit der Darstellung von Fig. 1, die beispielhaft die erfindungsgemäße Einrichtung 10 zeigt, beschriebenen Strahlenverlauf von der nicht dargestellten Röntgen- oder Elektronenstrahlenquelle zur Meß- oder Analyseeinrichtung (Detektor) 17 ab.

Bezugszeichenliste

10 Einrichtung
11 Spiegel- oder Fokussierungseinrichtung
12 Multilayerschicht
13 (einzelne) Schicht
14 Probe
15 primäre (einfallende) Röntgenstrahlen
16 Fluoreszenzstrahlen
17 Meß- oder Analyseanordnung (Detektor)
18 Schichtdicke
19 Träger/Substrat

**Patentansprüche**

1. Einrichtung zur Analyse atomarer und/oder molekularer Elemente mittels wellenlängendispersiver, röntgenspektrometrischer Einrichtungen, umfassend wenigstens eine eine Multilayerschicht aufweisende Spiegel- oder Fokussierungseinrichtung, insbesondere bei einem solchen Verfahren, bei dem von einer zu analysierenden Probe durch einfallende primäre Röntgen- oder Elektronenstrahlen induzierte Fluoreszenzstrahlung vor Auftreffen auf einem Meß- oder Analysedetektor auf die Spiegel- oder Fokussierungseinrichtung geleitet wird, **dadurch gekennzeichnet, daß** die flächenförmige Multilayerschicht (12) durch wenigstens ein Schichtenpaar ($13_1$, $13_2$) aus einer Lanthanschicht (La-Schicht) und einer Borcarbidschicht ($B_4C$) gebildet wird.

2. Einrichtung nach Anspruch 1, **dadurch gekennzeichnet, daß** die Multilayerschicht (12) aus einer Anzahl von 1 bis 100 Schichtpaaren ($13_1$, $13_n$) besteht.

3. Einrichtung nach Anspruch 1, **dadurch gekennzeichnet, daß** die Multilayerschicht (12) aus einer Anzahl von 40 bis 50 Schichtpaaren ($13_1$, $13_2$) besteht.

4. Einrichtung nach einem oder mehreren der Ansprüche 1 bis 3, **dadurch gekennzeichnet, daß** die Dicke (18) der jeweiligen Multilayerschicht (12) konstant ist.

5. Einrichtung nach einem oder mehreren der Ansprüche 1 bis 3, **dadurch gekennzeichnet, daß** die Dicke (18) der jeweiligen Multilayerschicht (12) über die Fläche variiert.

6. Einrichtung nach einem oder mehreren der Ansprüche 1 bis 5, **dadurch gekennzeichnet, daß** die Multilayerschicht (12) gekrümmt ist.

7. Einrichtung nach einem oder mehreren der Ansprüche 1 bis 6, **dadurch gekennzeichnet, daß** die Multilayerschicht (12) auf einem flächigen Träger (19) angeordnet ist.

8. Einrichtung nach Anspruch 7, **dadurch gekennzeichnet, daß** der Träger (19) gekrümmt ist.

9. Einrichtung nach einem oder mehreren der Ansprüche 1 bis 8, **dadurch gekennzeichnet, daß** die Dicke (18) der einzelnen Schichten (13) der Multilayerschicht (12) gleich ist.

10. Einrichtung nach einem oder mehreren der Ansprüche 1 bis 8, **dadurch gekennzeichnet, daß** die Dicke (18) der einzelnen Schichten (13) der Multilayerschicht (12) unterschiedlich ist.

11. Einrichtung nach einem oder mehreren der Ansprüche 1 bis 10, **dadurch gekennzeichnet, daß** die Dicke (18) der Schicht (13) im Bereich von 1 bis 20 nm liegt.

12. Verfahren zur Analyse atomarer und/oder molekularer Elemente mittels wellenlängendispersiver, röntgenspektrometrischer Einrichtungen, umfassend wenigstens eine eine Multilayerschicht aufweisende Spiegel- oder Fokussierungseinrichtung, auf die die primären Röntgenstrahlen oder Fluoreszenzstrahlen geleitet werden, insbesondere derart, bei dem von einer zu analysierenden Probe durch einfallende primäre Röntgen- oder Elektronenstrahlen induzierte Fluoreszenzstrahlen vor Auftreffen auf einem Meß- oder Analysedetektor auf die Spiegel- oder Fokussierungseinrichtung geleitet wird, **dadurch gekennzeichnet, daß** die primären Röntgenstrahlen oder die Fluoreszenzstrahlen auf die aus wenigstens einem Schichtenpaar aus einer Lanthanschicht (La-Schicht) und aus einer Borcarbidschicht ($B_4C$) gebildeten Multilayerschicht geleitet wird.

**Claims**

1. System for analysing atomic and/or molecular elements by means of wavelength-dispersive, X-ray spectrometer devices, comprising a mirror or focussing device with at least one multi-layered coating, in particular using a method whereby fluorescent radiation induced by incident primary X-rays or electron beams is directed from a sample to be analysed onto the mirror or focussing device before it reaches a measuring or analysis detector, **characterised in that** the surface multi-layered coating (12) comprises at least one coating pair ($13_1$, $13_2$) consisting of a layer of lanthanum (La layer) and a boron carbide layer ($B_4C$).

2. System as claimed in claim 1, **characterised in that** the multi-layered coating (120 consists of a number of coating pairs ($13_1$, $13_n$) ranging from 1 to 100.

3. System as claimed in claim 1, **characterised in that** the multi-layered coating (12) consists of a number of coating

pairs ($13_1$, $13_2$) ranging from 40 to 50.

4.  System as claimed in one or more of claims 1 to 3, **characterised in that** the thickness (18) of the respective multi-layered coating (12) is constant.

5.  System as claimed in one or more of claims 1 to 3, **characterised in that** the thickness (18) of the respective multi-layered coating varies across the surface.

6.  System as claimed in one or more of claims 1 to 5, **characterised in that** the multi-layered coating (12) is curved.

7.  System as claimed in one or more of claims 1 to 6, **characterised in that** the multi-layered coating (12) is disposed on a flat substrate (19).

8.  System as claimed in claim 7, **characterised in that** the substrate (19) is curved.

9.  System as claimed in one or more of claims 1 to 8, **characterised in that** the thickness (18) of the individual layers (13) of the multi-layered coating (12) is identical.

10. System as claimed in one or more of claims 1 to 8, **characterised in that** the thickness (18) of the individual layers (13) of the multi-layered coating (12) differs.

11. System as claimed in one or more of claims 1 to 10, **characterised in that** the thickness (18) of the layer (13) is in the range of from 1 to 20 nm.

12. Method of analysing atomic and/or molecular elements by means of wavelength-dispersive, X-ray spectrometer devices, comprising at least one mirror or focussing device with a multi-layered coating, to which fluorescent radiation induced by incident primary X-rays or electron beams is directed, in particular of the type whereby fluorescent radiation induced by incident primary X-rays or electron beams is directed from a sample to be analysed onto the mirror or focussing device before it reaches a measuring or analysis detector, **characterised in that** the primary X-ray or the fluorescent radiation is directed onto the multi-layered coating consisting of at least one layer pair comprising a lanthanum layer (La layer) and a boron carbide layer ($B_4C$).

## Revendications

1.  Dispositif pour analyser des éléments atomiques et/ou moléculaires au moyen de dispositifs spectrométriques à rayons X à dispersion de longueurs d'ondes, comprenant au moins un dispositif de focalisation ou à miroir présentant une composition multicouche, en particulier dans un procédé dans lequel un rayonnement de fluorescence d'un échantillon à analyser induit par des rayons X ou des rayons d'électrons incidents et primaires est conduit, avant impact sur un détecteur de mesure ou d'analyse, sur le dispositif de focalisation ou à miroir, **caractérisé en ce que** la composition multicouche planiforme (12) est formée d'au moins une paire de couches ($13_1$, $13_2$) composée d'une couche de lanthane (couche La) et d'une couche de carbure de bore ($B_4C$).

2.  Dispositif selon la revendication 1, **caractérisé en ce que** la composition multicouche (12) se compose d'un nombre de paires de couches ($13_1$, $13_n$) allant de 1 à 100.

3.  Dispositif selon la revendication 1, **caractérisé en ce que** la composition multicouche (12) se compose d'un nombre de paires de couches ($13_1$, $13_2$) allant de 40 à 50.

4.  Dispositif selon l'une ou plusieurs des revendications 1 à 3, **caractérisé en ce que** l'épaisseur (18) de chaque composition multicouche respective (12) est constante.

5.  Dispositif selon l'une ou plusieurs des revendications 1 à 3, **caractérisé en ce que** l'épaisseur (18) de chaque composition multicouche respective (12) varie le long de la surface.

6.  Dispositif selon l'une ou plusieurs des revendications 1 à 5, **caractérisé en ce que** la composition multicouche (12) est courbée.

**7.** Dispositif selon l'une ou plusieurs des revendications 1 à 6, **caractérisé en ce que** la composition multicouche (12) est disposée sur un support plat (19).

**8.** Dispositif selon la revendication 7, **caractérisé en ce que** le support (19) est courbé.

**9.** Dispositif selon l'une ou plusieurs des revendications 1 à 8, **caractérisé en ce que** l'épaisseur (18) de chacune des couches (13) de la composition multicouche (12) est identique.

**10.** Dispositif selon l'une ou plusieurs des revendications 1 à 8, **caractérisé en ce que** l'épaisseur (18) de chacune des couches (13) de la composition multicouche (12) est différente.

**11.** Dispositif selon l'une ou plusieurs des revendications 1 à 10, **caractérisé en ce que** l'épaisseur (18) de la couche (13) se situe dans la plage allant de 1 à 20 nm.

**12.** Procédé pour analyser des éléments atomiques et/ou moléculaires au moyen de dispositifs spectrométriques à rayons X à dispersion de longueurs d'ondes, comprenant au moins un dispositif de focalisation ou à miroir présentant une composition multicouche, sur lequel les rayons X ou les rayons fluorescents primaires sont conduits, en particulier de telle sorte que les rayons fluorescents d'un échantillon à analyser induits par des rayons X ou des rayons d'électrons incidents et primaires sont conduits, avant impact sur un détecteur de mesure ou d'analyse, sur le dispositif de focalisation ou à miroir, **caractérisé en ce que** les rayons X ou les rayons fluorescents primaires sont conduits sur la composition multicouche formée au moins d'une paire de couches composée d'une couche de lanthane (couche La) et d'une couche de carbure de bore ($B_4C$).

# Fig. 1

10

11

18~{

15

16"

16

16'

17

18

14

# Fig. 2

11

16'

16

16'

13₇

16

13₆

16

13₅

θ

θ

13₄

12

13₃

13₂

13₁

19

# Fig. 3